# EUROPEAN PATENT SPECIFICATION

(11) **EP 2 464 514 B1**
(45) Date of publication and mention of the grant of the patent: **10.07.2013**
(21) Application number: 10744794.8
(22) Date of filing: 10.08.2010
(51) Int. Cl.: B32B 27/04, B03C 3/00

(54) **DURABLE NONWOVEN ALLERGEN BARRIER LAMINATES**
BESTÄNDIGE ALLERGENBARRIERELAMINATE AUS VLIES
STRATIFIÉS DE BARRIÈRE ALLERGÈNE NON TISSÉE DURABLE

(30) Priority: 10.08.2009 US 538450
(43) Date of publication of application: 20.06.2012
(73) Proprietor: E. I. du Pont de Nemours and Company, Wilmington, DE 19898 (US)
(72) Inventor: KAWKA, Dariusz, Wlodzimierz, Midlothian Virginia 23112 (US)
(74) Representative: Heinemann, Monica
(86) International application number: PCT/US2010/044942
(87) International publication number: WO 2011/019675

(56) References cited:
- WO-A1-96/36483
- WO-A1-98/55295
- WO-A1-2007/049008
- GB-A- 2 433 413

## Description

### BACKGROUND OF THE INVENTION

### 1. Field of the Invention.

This invention relates to allergen barrier laminates useful as washable coverings for bedding articles that include such items as pillow and mattress covers.

### 2. Description of Related Art.

United States Patent Application Publication US2008/0120783 of Knoff et al discloses an allergen-barrier fabric and a mattress, a pillow, a bed covering, and a liner each comprising an allergen-barrier fabric. This patent publication discloses these allergen-barrier fabrics can withstand at least 10 washings, and even up to 50 washings without mechanical separation or delamination of the various fabric layers, however there is no suggestion as to how such fabrics can routinely withstand numerous washings yet maintain their primary function as a barrier material as measured by their filtration efficiency. Since many bedding articles require routine washing, the combination of mechanical durability and filtration performance durability in an allergen-barrier is a real need.

### SUMMARY OF THE INVENTION

In one embodiment, this invention relates to a laminate useful as an allergen barrier structure comprising in order, a) a first nonwoven fabric layer comprising fibers made from a first thermoplastic polymer and having a basis weight of at least 15 grams per square meter; b) a nonwoven allergen barrier layer having a basis weight of from 6 to 10 grams per square meter and consisting of fibers made from a second thermoplastic polymer and having an average diameter of from 100 to 450 nanometers; and c) a second nonwoven fabric layer comprising fibers made from the first thermoplastic polymer and having a basis weight of at least 15 grams per square meter; wherein the layers a), b), and c) are thermally point-bonded together with a plurality of uniformly spaced thermally bonded points with the maximum spacing between adjacent bonded points being from 2 to 5 mm; and wherein the laminate has a filtration efficiency as measured by ASTM F2638-07 after 15 washings of 95 percent or greater for a 1 micrometer particle challenge at up to 1.6 liters per minute airflow.

### BRIEF DESCRIPTION OF THE DRAWINGS

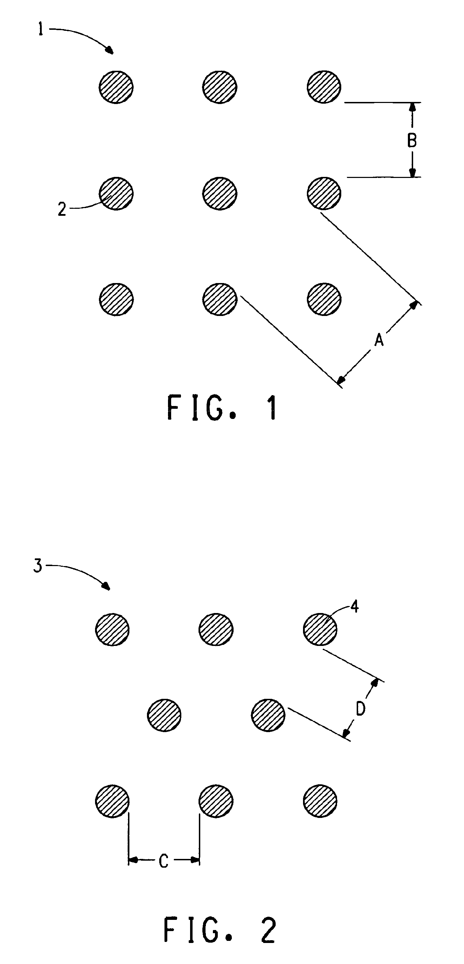

Figures 1 and 2 are illustrations of some bonding patterns having a plurality of uniformly spaced thermally bonded points that provide a durable allergen barrier laminate.

### DETAILED DESCRIPTION OF THE INVENTION

In one embodiment, this invention relates to a laminate that is useful as a washable covering for bedding articles, the laminate having a total basis weight of from 35 to 70 grams per square meter, preferably 35 to 45 grams per square meter, and being an allergen barrier structure that retains a filtration efficiency of 95 percent or greater after 15 washings when tested using a 1 micrometer particle challenge and up to 1.6 liters per minute airflow as measured by ASTM F2638-07. The laminate comprises, in order, a first nonwoven fabric layer comprising fibers made from a first thermoplastic polymer and having a basis weight of at least 15 grams per square meter; a nonwoven allergen barrier layer having a basis weight of from 6 to 10 grams per square meter and consisting of fibers having average diameter of from 100 to 450 nanometers; and a second nonwoven fabric layer comprising fibers made from the first thermoplastic polymer and having a basis weight of at least 15 grams per square meter.

Further, the three layers are thermally point-bonded together with a plurality of uniformly spaced thermally bonded points, with the maximum spacing between adjacent bonded points being from 2 to 5 mm. In some preferred embodiments the spacing between adjacent bonded points is from 3 to 4 mm. It is believed that one reason the laminate has improved allergen performance and durability is the combination of the nonwoven allergen barrier layer having a basis weight of at least 6 grams per square meter with the high density of thermal point-bonds. Another reason for the durability is that the two outer layers of the laminate comprise fibers made of the same thermoplastic polymer, which reduces the unequal layer shrinkage of the two nonwoven outer fabric layers with each successive washing, helping to eliminate localized stresses in the laminate that could cause separation or structural wrinkles between the laminated layers.

The outer nonwoven fabric layers are attached to the allergen barrier layer by thermal point bonding, which can be achieved by using a conventional point bonder comprising one or more nips and one or more heated rolls having an embossing pattern. A preferred method is by ultrasonic bonding. For convenience, the allergen barrier layer can be pre-combined or spun onto the first nonwoven fabric layer and supplied by roll to one unwind of the bonder while a roll of the second nonwoven fabric layer is supplied to a second unwind of the bonder. The two sheets are then combined, with the allergen barrier layer in the middle, and point bonded in the at least one nip of the bonder to form the laminate. Alternatively the bonder could employ three unwinds. The first, second, and third unwind would then have a roll of first nonwoven fabric layer, a roll of allergen barrier layer, and a roll of second nonwoven fabric layer, respectively. These three sheets would then be combined, with the allergen barrier layer in the middle, and point bonded in the at least one nip of the bonder to form the laminate. After bonding, if desired, the laminate could be cooled prior to winding up in a roll.

The laminate has a plurality of discrete bonded areas uniformly spaced across the laminate. The maximum spacing between adjacent bonded points is 2 to 5 mm; preferably 3 to 4 mm. Fig. 1 represents a small segment of a one possible bonding pattern 1 including a set of uniformly spaced thermally bonding points arranged in a rectangular array, including round bonding point 2. In this type of rectangular pattern, "adjacent bonded points" is meant to include the four bonding points immediately orthogonal a bonding point, as in the north, south, east, and west directions on a compass. In a rectangular bonding pattern, bonding points that are diagonal from each other are not considered adjacent bonding points as defined herein. As shown in Fig. 1, the diagonal distance "A" between points will always be longer than the orthogonal distance between points, which is represented in this figure by the distance "B" oriented vertically in the array of points. Alternatively "B" could have been shown oriented horizontally in the array, with the same result. In basic geometry, the orthogonal distance between points in a rectangular array is always shorter than the diagonal distance. The maximum spacing between adjacent bonded points in a rectangular bonding pattern is therefore the maximum vertical or horizontal distance between adjacent points, as measured from the outer surface of one point to the outer surface of the other point. In some preferred embodiments, in the rectangular array the distance between horizontal points in the array is equal to the distance between vertical points in the array.

Fig. 2 represents a small segment of an alternative bonding pattern 3 including a set of uniformly spaced thermally bonding points that are arranged in a triangular or offset array, including round bonding point 4. In this type of triangular pattern, "adjacent bonded points" is meant to include the four bonding points immediately diagonal a bonding point. As shown in Fig. 2, the horizontal distance "C" between points may be smaller than the diagonal distance between adjacent points "D"; however, for the purposes herein, adjacent bonding points in this type of array are those points that are diagonal from each other, which could be oriented either as a left or right diagonal from each other in the array of bond points. The maximum spacing between adjacent bonded points in this type of triangular bonding pattern is therefore the maximum diagonal distance between points in the array, as measured from the outer surface of one point to the outer surface of the other point. In some preferred embodiments, in the triangular or offset array the diagonal distance between all adjacent points in the array is equal.

In some embodiments, the plurality of thermally bonded points includes points having an effective diameter of from 1 mm to 2 mm. In some embodiments the bonding points have a solid circular shape; however, other solid shapes are possible, including ovals, diamonds, squares, triangles, and other geometric figures. By effective diameter it is meant the diameter of a circle having the circumference equal to the measured circumference of the bonding point shape.

In some embodiments, the peel strength of the laminate is 0.5 pounds per inch or greater. This is believed to ensure the laminate is adequately adhered together and is an indicator of adequate wash and mechanical durability over many wash/dry cycles. Laminates with peel strength of 0.3 Ibs/in or less have been found to have large scale delamination during washing. Laminates with peel strength of greater than 0.3 Ibs/in but less than 0.5 Ibs/in tend to have less large scale delamination with multiple washes, but do show signs of a textured surface that is indicative of small scale or localized delamination.

In some embodiments, the air permeability of the laminate is 5 cubic feet per minute or greater. In some preferred embodiments, the air permeability of the laminate is 25 cubic feet per minute or greater. This provides an adequate amount of air breathability through the laminate needed for the practical use of bedding items that are fully encased by the barrier laminate. High air permeability through the barrier laminate allows for a proper airflow management in the bedding item, such as a pillow, by preventing excessive pressurization and ballooning of the encased bedding item as well as minimizing the build-up of the localized heat streaks in the bedding. While laminates having an air permeability of less than 5 cubic feet per minute may be thought to have improved barrier, if the laminate does not have adequate air permeability, the bedding item will become pressurized during use, such as by the act of laying one's head on a pillow. This forces the air in the pillow to be squeezed out though a zipper and/or sewn seams, instead of through the barrier material; this is undesired because zippers and sewn seams tend to provide much poorer filtering than the laminate.

The filtration efficiency of the laminate is 95 percent or greater after 15 washings when tested using a 1 micrometer particle challenge and up to 1.6 liters per minute airflow as measured by ASTM F2638-07. This level of filtration efficiency is believed to provide adequate protection and barrier properties, because some allergens can be as small as 1 micrometer (i.e. cat dander, fragmented larger allergens etc), and an allergen fabric should be an effective filter media at a challenge level equivalent to the majority of the expected allergens from bedding. Airflow level can affect, to some extent, filtration efficiency of the allergen fabric/assembly and 1.6 liters/minute airflow represents a slightly higher air displacement than is typically experienced during normal human movement during sleep and is therefore a more rigorous test of laminate performance.

The laminate comprises at least a first nonwoven fabric layer and a second nonwoven fabric layer, both layers comprising fibers made from a first thermoplastic polymer and both layers having a basis weight of at least 15 grams per square meter. In some embodiments at least one of the layers has a basis weight of at least 18 grams per square meter; in some embodiments both layers have a basis weight of at least 18 grams per square meter.

By "nonwoven" is meant a network of fibers forming a flexible sheet material producible without weaving or knitting and held together by either (i) mechanical interlocking of at least some of the fibers, (ii) fusing at least some parts of some of the fibers, or (iii) bonding at least some of the fibers by use of a binder material. Non-woven includes felts, spunlaced (or hydroentangled) fabrics and sheets, flashspun fabrics and sheets, spunbonded and meltblown fabrics and sheets, and the like. In some preferred embodiments, the nonwoven is a spunbonded fabric. Examples of this type of fabric include but are not limited to spunbonded Merabon® style Q2017NW or Q2020NW polypropylene nonwoven fabric from Kolon; Finon® style C3020NW, K2020NW, or K2030NW polyester spunbonded nonwoven fabric from Kolon; spunbonded 15.3 or 18 g/m² polypropylene non-woven fabric from Toray Saehan Inc; and Cerex® 0.5 to 2 oz/yd² nylon nonwoven fabrics from Cerex Advanced Fabrics, Inc. Kolon is located in Kwacheon-city, Kyunggi-do South Korea. Torya Saehan Inc. is located in Seoul, South Korea. Cerex Advanced Fabrics, Inc is located in Cantonment, FL

In some embodiments the first and second nonwoven fabric layers comprise fibers made from a first thermoplastic polymer selected from the group consisting of polyamide, polypropylene, polyester, and mixtures thereof. In some preferred embodiments, the polymer is polypropylene.

In some embodiments the first thermoplastic polymer has a melting point at least 30 degrees Celsius greater than the second thermoplastic polymer as is the case when the outer nonwoven layers are, for example, nylon, especially nylon 6, 6, or polyester terephthalate and the allergen barrier layer is polypropylene or polyurethane. This allows durable attachment of the functional allergen barrier layer to the inner sides of the nonwoven face and back fabric layers without a need for the through-melting of the outside nonwoven fabric layers at the bond points. This can improve the comfort (i.e. softness, flatness) and visual (i. e. no bond point pattern) aesthetics of the final laminate.

In some preferred embodiments the second thermoplastic polymer has a melting point at least 30 degrees Celsius greater than the first thermoplastic polymer, as is the case when the outer nonwoven layers are polypropylene and the allergen barrier layer is nylon. This allows through-melting of the outside nonwoven fabric layers at the bond points to increase or improve the cohesive strength and wash and/or mechanical durability of the laminate without through-melting of the functional allergen barrier layer. This can improve the barrier and functional attributes of the final laminate because there is no through-melting of the functional allergen barrier layer at the bonding points which could cause excessive compression and reduced airflow through that layer.

In another preferred embodiment, the melting points of the first thermoplastic polymer and the second thermoplastic polymer are the same or substantially the same, as when the outer nonwoven layers and the allergen barrier layer are all made from the same polymer, such as an all nylon, all polypropylene, or all polyester laminate. This can provide reduced potential stress at the bonding points between the individual layers caused by differences in specific thermal deformation or shrinkage characteristics if the layers are made from different polymers.

The allergen barrier layer has a basis weight of from 6 to 10 grams per square meter (gsm). A basis weight of less that 6 gsm is believed to promote delamination of the laminate and is believed to not have adequate mechanical integrity for at least 15 washings. A basis weight of greater than 10 gsm is not thought to add substantially improved performance but does add additional undesired cost.

The allergen barrier layer is a nonwoven consisting of fibers having average diameter of from 100 to 450 nanometers. As used herein, by average diameter is it meant the number average fiber diameter of the individual fibers in the nonwoven. In some embodiments, the allergen barrier layer comprises fibers made from a second thermoplastic polymer that is different from the first thermoplastic polymer used in the first and second nonwoven fabric layers. In other embodiments, the allergen barrier layer comprises fibers made from a second thermoplastic polymer that is the same as the first thermoplastic polymer used in the first and second nonwoven fabric layers. In some embodiments, the allergen barrier layer is consists of fibers made from a polymer selected from the group consisting of polyamide, polypropylene, polyester, and mixtures thereof. In some embodiments, the allergen barrier layer consists of fibers made from a polymer selected from the group consisting of polyurethane, polyolefin, and mixtures thereof. In some preferred embodiments, the nonwoven comprises fibers made from nylon.

In some embodiments, the allergen barrier layer has a Frazier air permeability of 3.5 m³/min/m² or greater. In some preferred embodiments the air permeability is 5 m³/min/m² or greater, and in some most preferred embodiments, the air permeability is 8 m³/min/m² or greater. The high air flow through the nanofiber layers of the present invention result in allergen-barrier fabrics providing great comfort to the user due to their breathability, while still maintaining a low level of allergen penetration.

In some embodiments, the polymeric nanofiber-containing web used as the allergen barrier layer can be produced by techniques such as electrospinning or electroblowing. Both electrospinning and electroblowing techniques can be applied to a wide variety of polymers, so long as the polymer is soluble in a solvent under relatively mild spinning conditions, i.e. substantially at ambient conditions of temperature and pressure. The polymer solution is prepared by selecting an appropriate solvent for the polymer. Suitable solvents can include alcohols, formic acid, dimethylacetamide and dimethyl formamide. The polymer solution can include other additives including any resins compatible with an associated polymer, plasticizers, ultraviolet ray stabilizers, crosslinking agents, curing agents, reaction initiators, colorants such as dyes and pigments, etc. If desired and/or needed, heating can be used to assist the dissolution of the polymer or additives.

In electrospinning, a high voltage is applied between a polymer solution and a target surface to create nanofibers and nonwoven mats. While many arrangements are possible, in essence, charge builds up on droplets of solution until the charge overcomes the surface tension of the droplets, causing the droplets to elongate and form fibrous material that is "spun" toward a target surface. Representative electrospinning processes are disclosed for example in United States Patent Nos. 4,127,706 and 6,673,136.

In electroblowing, a solution of polymer and solvent is fed to a spinning nozzle within a spinneret, to which a high voltage is applied and through which the polymeric solution is discharged. Meanwhile, an optionally heated compressed gas, typically air, is issued from air nozzles disposed in the sides of, or at the periphery of the spinning nozzle. The air is directed generally downward as a blowing gas stream which envelopes and forwards the polymeric solution from the spinning nozzle and aids in the formation of the fiber web. Generally, a plurality of spinnerets is used, which forms multiple fiber webs which are collected as a matt on an electrically grounded target, which is typically a porous collection belt, above a vacuum chamber. One representative electroblowing process is disclosed in International Publication Number W02003/080905 (U.S. Serial No. 10/822,325). This process is able to make webs having basis weights of 1 g/m² and higher.

The laminate is useful in a range of bedding and upholstery fabric applications, including but not limited to, pillow and mattress ticking, pillow and mattress protectors, pillow and mattress covers, sheets, mattress pads, comforters and duvets.

### Test Methods

Filtration efficiency testing. Filtration performance was determined for a 1 micrometer challenge using methodology as dictated by ASTM F2638-07, which is a standard test method for the use of aerosol filtration for measuring the performance of porous packaging materials as a surrogate microbial barrier.

Fiber Diameter was determined as follows. Ten scanning electron microscope (SEM) images at 5,000x magnification were taken of each nanofiber layer sample. The diameter of eleven (11) clearly distinguishable nanofibers were measured from the photographs and recorded. Defects were not included (i.e., lumps of nanofibers, polymer drops, intersections of nanofibers). The average (mean) fiber diameter for each sample was calculated.

Air permeability. The Frazier air permeability of laminates was determined before and after minimum of 35 wash/dry cycles to check for any structural changes related to sample wash durability. Frazier Air Permeability is a measure of air permeability of porous materials and is reported in units of ft³/min/ft². It measures the volume of air flow through a material at a differential pressure of 0.5 inches (12.7 mm) of water. An orifice is mounted in a vacuum system to restrict flow of air through sample to a measurable amount. The size of the orifice depends on the porosity of the material. Frazier permeability was measured in units of ft³/min/ft² using a Sherman W. Frazier Co. dual manometer with calibrated orifice, and converted to units of m³/min/m². All washed and unwashed laminates were measured 5 times at several locations with a standard commercial FX 3300 Air Permeability tester (Frazier) at 125 Pa over a 38 cm² area. Wash durability. All laminates were washed in a typical GE top loaded consumer washer and dried in a typical GE consumer air dryer. Five laminate samples were used for the wash durability test. The wash durability test consisted of 15 wash cycles, with each washing cycle consisting of washing at hot/warm selection (∼60 minutes), with hot water temperature set at 140F, followed by 40 minutes of low to medium temperature air drying, all samples having been washed with typical commercially available off-the-shelf detergent. Each washed sample was inspected for any signs of delamination or texturing (i.e., surface wrinkling suggestive of localized delamination).

Basis Weight was determined by ASTM D-3776 and reported in g/m².

### Examples

All of the laminates used an allergen barrier layer that consisted of nylon 6, 6 nanofibers made using the process as disclosed in International Publication Number W02003/080905. In the examples that follow, numerical items (e.g., 1-1, 1-2) illustrate embodiments of the invention while alphabetic items (e.g. 1-A, 1-B) illustrate comparisons.

### Example 1

This example illustrates the structural integrity and filtration performance of laminates after 15 washes. Three-layer laminates were made having two spunbonded polypropylene nonwoven fabric outer layers ultrasonically bonded to 6 g/m² nanofiber allergen barrier layer having a nominal fiber size of 300 nm.

Specifically, the laminates were produced by depositing the nanofiber allergen barrier layer on one spunbonded polypropylene nonwoven fabric layer, and then placing a second spunbonded polypropylene nonwoven fabric layer on to the exposed nanofiber allergen barrier layer and ultrasonically bonding all the layers together using commercially available ultrasonic equipment. For items 1-1 and 1-2, the spunbonded polypropylene nonwoven fabric layers on both sides had a basis weight of 18 g/m². For item 1-3, one spunbonded polypropylene nonwoven fabric layer had a basis weight of 15.3 while the other had a basis weight of 18 g/m². Filtration efficiency, air permeability, and structural integrity were then evaluated for these samples before and after 15 washings. As shown in Table 1, after 15 washings these laminates retained a filtration efficiency of at least 95%, maintained good air permeability, and passed the structural integrity test.

**Table 1**

| Item | Point Bond Size (mm) | Point Bond Spacing (mm) | Filtration Efficiency Prior to Washing (%) | Filtration Efficiency After 15 Washings (%) | Air Perm Unwashed (cfm) | Air Perm After 15 Washings (cfm) | Structural Integrity After 15 Washings |
|---|---|---|---|---|---|---|---|
| 1-1 | 1 | 3 | 100 | 98.8 (Pass) | 29.8 | 29.3 | Pass |
| 1-2 | 1 | 3 | 100 | 97.2 (Pass) | 26.1 | 27.6 | Pass |
| 1-3 | 1 | 3 | 100 | 98.5 (Pass) | 26.0 | 27.2 | Pass |

### Example 1-A

Item 1-1 of Example 1 was repeated, however, one of the spunbonded polypropylene nonwoven fabric layers was replaced by a plain woven polycotton (65% PET/ 355 Cotton) fabric prior to ultrasonically bonding. The bonding pattern and the allergen barrier layer was the same and the other outer layer was a spunbonded polypropylene nonwoven fabric layer having a basis weight of 18 g/m². When tested, the laminate had excellent filtration efficiency prior to washing, but upon washing it delaminated, making further testing impossible.

### Example 1-B

Example 1-A was repeated but with a modified ultrasonic bonding pattern, using 2 mm-diameter bonding points spaced 10.7 mm apart. When tested the laminate had excellent filtration efficiency prior to washing, but upon washing it delaminated, making further testing impossible.

### Example 2

Item 1-1 of Example 1 was repeated except the allergen barrier layer had a reduced basis weight of 5g/m² versus 6 g/m². This was designated comparison item 2-A. A second laminate was then made as Item 2-B, except one of the spunbonded polypropylene nonwoven fabric layers was replaced by a plain woven polycotton (65% PET/ 355 Cotton) fabric prior to ultrasonically bonding. Filtration efficiency, air permeability, and structural integrity were then evaluated for these samples before and after 15 washings. As shown in Table 2, the sample made with two spunbonded nonwoven outer layers had adequate structural integrity after 15 washings but did not retain adequate filtration performance. The sample having one woven polycotton outer layer and one spunbonded nonwoven outer layer delaminated when washed 15 times and did not pass the structural integrity test.

**Table 2**

| Item | Point Bond Size (mm) | Point Bond Spacing (mm) | Filtration Efficiency Prior to Washing | Filtration Efficiency After 15 Washings | Air Perm Unwashed (cfm) | Air Perm After 15 Washings (cfm) | Structural Integrity After 15 Washings |
|---|---|---|---|---|---|---|---|
| 2-A | 1 | 3 | 95.4 | 86.5 (Fail) | 30.9 | 35.3 | Pass |
| 2-B | 1 | 3 | 94.6 | Delaminated | 41.3 | Delaminated | Fail |

Two additional laminates were made, using the materials of Item 2-A, but using different bonding patterns. Item 2-C used 2 mm-diameter bonding points that were spaced apart 10.7 mm. Item 2-D used a diamond quilt pattern consisting of a series of bonded points forming a rhombus or diamond shape having 45 mm long sides, and having a bonding points of 1.5 mm diameter in size and spaced linearly apart 6 mm in the diamond-shaped sides. The both samples showed localized delamination when washed 15 times and did not pass the structural integrity test.

## Claims

1. A laminate useful as an allergen barrier structure, comprising:
in order,
a) a first nonwoven fabric layer comprising fibers made from a first thermoplastic polymer and having a basis weight of at least 15 grams per square meter;
b) a nonwoven allergen barrier layer having a basis weight of from 6 to 10 grams per square meter and consisting of fibers made from a second thermoplastic polymer and having an average diameter of from 100 to 450 nanometers; and
c) a second nonwoven fabric layer comprising fibers made from a first thermoplastic polymer and having a basis weight of at least 15 grams per square meter;
wherein the layers a), b), and c) are thermally point-bonded together with a plurality of uniformly spaced thermally bonded points, with the maximum spacing between adjacent bonded points being from 2 to 5 mm; and
wherein the laminate has a filtration efficiency as measured by ASTM F2638-07 after 15 washings of 95 percent or greater for a 1 micrometer particle challenge at up to 1.6 liters per minute airflow.

2. The laminate of claim 1, wherein the spacing between adjacent bonded points is from 3 to 4 mm.

3. The laminate of claim 1, wherein the plurality of thermally bonded points includes points having an effective diameter of from 1 mm to 2 mm.

4. The laminate of claim 1, wherein the first thermoplastic polymer is the same as the second thermoplastic polymer.

5. The laminate of claim 1, wherein the first thermoplastic polymer is a polymer selected from the group consisting of polyamide, polypropylene, polyester, and mixtures thereof.

6. The laminate of claim 1, wherein the second thermoplastic polymer is a polymer selected from the group consisting of polyamide, polypropylene, polyester, and mixtures thereof.

7. The laminate of claim 1, wherein the second thermoplastic polymer is a polymer selected from the group consisting of polyurethane, polyolefin, and mixtures thereof.

8. The laminate of claim 1, wherein layer a) or c) have a basis weight of at least 18 grams per square meter.

9. The laminate of claim 1, wherein layer a) and c) have a basis weight of at least 18 grams per square meter.

10. The laminate of claim 1, wherein the air permeability of the laminate is 5 cubic feet per minute or greater.

11. The laminate of claim 10, wherein the air permeability of the laminate is 25 cubic feet per minute or greater.

12. The laminate of claim 1, wherein the first thermoplastic polymer having a melting point at least 30 degrees Celsius greater than the second thermoplastic polymer.

13. The laminate of claim 1, wherein the second thermoplastic polymer having a melting point at least 30 degrees Celsius greater than the first thermoplastic polymer.

14. The laminate of claim 1, wherein the first thermoplastic polymer and the second thermoplastic polymer have the same or substantially the same melting point.

## Patentansprüche

1. Laminat, das als Allergenbarrieregebilde nützlich ist, umfassend:
in dieser Reihenfolge
a) eine erste Vliesstoffschicht umfassend Fasern, die aus einem ersten thermoplastischen Polymer hergestellt sind und ein Flächengewicht von mindestens 15 Gramm pro Quadratmeter aufweisen;
b) eine Vliesallergenbarriereschicht, die ein Flächengewicht von 6 bis 10 Gramm pro Quadratmeter aufweist und aus Fasern besteht, die aus einem zweiten thermoplastischen Polymer hergestellt sind und einen durchschnittlichen Durchmesser von 100 bis 450 Nanometern aufweisen; und
c) eine zweite Vliesstoffschicht umfassend Fasern, die aus einem ersten thermoplastischen polymer hergestellt sind und ein Flächengewicht von mindestens 15 Gramm pro Quadratmeter aufweisen;
wobei die Schichten a), b) und c) thermisch mit einer Mehrzahl von gleichförmig beabstandeten thermisch bondierten Punkten punktbondiert werden, wobei der maximale Abstand zwischen nebeneinanderliegenden bondierten Punkten 2 bis 5 mm beträgt; und
wobei das Laminat eine Filtriereffizienz, wie ASTM F2638-07 gemäß gemessen, nach 15 Wäschen von 95 Prozent oder mehr bei einer Teilchenprovokation von 1 Mikrometer bei einer Luftströmung von bis zu 1,6 Litern pro Minute aufweist.

2. Laminat nach Anspruch 1, wobei der Abstand zwischen nebeneinanderliegenden bondierten Punkten 3 bis 4 mm beträgt.

3. Laminat nach Anspruch 1, wobei die Mehrzahl von thermisch bondierten Punkten Punkte umfasst, die einen wirksamen Durchmesser von 1 mm bis 2 mm aufweisen.

4. Laminat nach Anspruch 1, wobei das erste thermoplastische Polymer gleich ist wie das zweite thermoplastische Polymer.

5. Laminat nach Anspruch 1, wobei das erste thermoplastische Polymer ein Polymer ist ausgewählt aus der Gruppe bestehend aus Polyamid, Polypropylen, Polyester und Mischungen davon.

6. Laminat nach Anspruch 1, wobei das zweite thermoplastische Polymer ein Polymer ist ausgewählt aus der Gruppe bestehend aus Polyamid, Polypropylen, Polyester und Mischungen davon.

7. Laminat nach Anspruch 1, wobei das zweite thermoplastische Polymer ein Polymer ist ausgewählt aus der Gruppe bestehend aus Polyurethan, Polyolefin und Mischungen davon.

8. Laminat nach Anspruch 1, wobei die Schicht a) oder c) ein Flächengewicht von mindestens 18 Gramm pro Quadratmeter aufweist.

9. Laminat nach Anspruch 1, wobei die Schichten a) und c) ein Flächengewicht von mindestens 18 Gramm pro Quadratmeter aufweisen.

10. Laminat nach Anspruch 1, wobei die Luftdurchlässigkeit des Laminats 5 Kubikfuß pro Minute oder mehr beträgt.

11. Laminat nach Anspruch 10, wobei die Luftdurchlässigkeit des Laminats 25 Kubikfuß pro Minute oder mehr beträgt.

12. Laminat nach Anspruch 1, wobei das erste thermoplastische Polymer einen Schmelzpunkt von mindestens 30 Grad Celsius über demjenigen des zweiten thermoplastischen Polymers aufweist.

13. Laminat nach Anspruch 1, wobei das zweite thermoplastische Polymer einen Schmelzpunkt von mindestens 30 Grad Celsius über demjenigen des ersten thermoplastischen Polymers aufweist.

14. Laminat nach Anspruch 1, wobei das erste thermoplastische Polymer und das zweite thermoplastische Polymer denselben oder im Wesentlichen denselben Schmelzpunkt aufweisen.

## Revendications

1. Stratifié utile comme structure formant barrière aux allergènes, comprenant:
dans l'ordre,
a) une première couche de textile non-tissé comprenant des fibres fabriquées à partir d'un premier polymère thermoplastique et ayant un poids de base d'au moins 15 grammes par mètre carré;
b) une couche de textile non-tissé formant barrière aux allergènes ayant un poids de base de 6 à 10 grammes par mètre carré et constituée de fibres fabriquées à partir d'un second polymère thermoplastique et ayant un diamètre moyen de 100 à 450 nanomètres; et
c) une seconde couche de textile non-tissé comprenant des fibres fabriquées à partir d'un premier polymère thermoplastique et ayant un poids de base d'au moins 15 grammes par mètre carré;
dans lequel les couches a), b) et c) sont thermiquement liées ensemble par des points à une pluralité de points uniformément espacés et thermiquement liés, avec l'espacement maximal entre les points liés adjacents étant de 2 à 5 mm; et
dans lequel le stratifié a une efficacité de filtration telle que mesurée par ASTM F2638-07 après 15 lavages de 95 pour cent ou plus pour une confrontation à des particules de 1 micromètre allant jusqu'à 1,6 litre par minute d'écoulement d'air.

2. Stratifié selon la revendication 1, dans lequel l'espacement entre les points liés adjacents est de 3 à 4 mm.

3. Stratifié selon la revendication 1, dans lequel la pluralité des points thermiquement liés comprend des points ayant un diamètre efficace de 1 mm à 2 mm.

4. Stratifié selon la revendication 1, dans lequel le premier polymère thermoplastique est le même que le second polymère thermoplastique.

5. Stratifié selon la revendication 1, dans lequel le premier polymère thermoplastique est un polymère sélectionné parmi le groupe constitué du polyamide, du polypropylène, du polyester et de leurs mélanges.

6. Stratifié selon la revendication 1, dans lequel le second polymère thermoplastique est un polymère sélectionné parmi le groupe constitué du polyamide, du polypropylène, du polyester et de leurs mélanges.

7. Stratifié selon la revendication 1, dans lequel le second polymère thermoplastique est un polymère sélectionné parmi le groupe constitué du polyuréthane, des polyoléfines et de leurs mélanges.

8. Stratifié selon la revendication 1, dans lequel les couches a) ou c) ont un poids de base d'au moins 18 grammes par mètre carré.

9. Stratifié selon la revendication 1, dans lequel les couches a) et c) ont un poids de base d'au moins 18 grammes par mètre carré.

10. Stratifié selon la revendication 1, dans lequel la perméabilité à l'air du stratifié est de 5 pieds cubiques par minute ou plus.

11. Stratifié selon la revendication 10, dans lequel la perméabilité à l'air du stratifié est de 25 pieds cubiques par minute ou plus.

12. Stratifié selon la revendication 1, dans lequel le premier polymère thermoplastique a un point de fusion d'au moins 30 degrés Celsius de plus que le second polymère thermoplastique.

13. Stratifié selon la revendication 1, dans lequel le second polymère thermoplastique a un point de fusion d'au moins 30 degrés Celsius de plus que le premier polymère thermoplastique.

14. Stratifié selon la revendication 1, dans lequel le premier polymère thermoplastique et le second polymère thermoplastique ont le même ou substantiellement le même point de fusion.
